# EUROPEAN PATENT SPECIFICATION

(11) **EP 2 274 673 B1**
(45) Date of publication and mention of the grant of the patent: **11.01.2017**
(21) Application number: 09731636.8
(22) Date of filing: 08.04.2009
(51) Int. Cl.: G06F 9/445

(54) **METHODS AND SYSTEMS FOR EMBEDDING UPGRADE STEPS FOR LAYERED ARCHITECTURES**
VERFAHREN UND SYSTEME ZUM EINBETTEN VON AUFRÜSTUNGSSCHRITTEN FÜR GESCHICHTETE ARCHITEKTUREN
PROCÉDÉS ET SYSTÈMES D INTÉGRATION D ÉTAPES DE MISE À NIVEAU POUR DES ARCHITECTURES EN COUCHES.

(30) Priority: 18.04.2008 US 46015 P; 10.07.2008 US 171109
(43) Date of publication of application: 19.01.2011
(73) Proprietor: Telefonaktiebolaget LM Ericsson (publ), 164 83 Stockholm (SE)
(72) Inventor: TOEROE, Maria, Montreal Québec H3G 1A9 (CA)
(74) Representative: Röthinger, Rainer
(86) International application number: PCT/IB2009/051494
(87) International publication number: WO 2009/127997

(56) References cited:
- WO-A-2004/010292
- WO-A-2004/010293

## Description

### TECHNICAL FIELD

The present invention generally relates to systems and methods associated with layered architectures (hardware and software) and, more particularly, to upgrading such systems.

### BACKGROUND

High availability systems(also known as HA systems) are systems that are implemented primarily for the purpose of improving the availability of services which the systems provide. Availability can be expressed as a percentage of time during which a system or service is 'up'. For example, a system designed for 99.999% availability (so called 'five nines' availability) refers to a system or service which has a downtime of only about 0.44 minutes/month or 5.26 minutes/year.

High availability systems provide for a designed level of availability by employing redundant nodes, which are used to provide service when system components fail. For example, if a server running a particular application crashes, an HA system will detect the crash and restart the application on another, redundant node. Various redundancy models can be used in HA systems. For example, an N+1 redundancy model provides a single extra node (associated with a number of primary nodes) that is brought online to take over the role of a node which has failed. However, in situations where a single HA system is managing many services, a single dedicated node for handling failures may not provide sufficient redundancy. In such situations, an N+M redundancy model, for example, can be used wherein more than one (M) standby nodes are included and available.

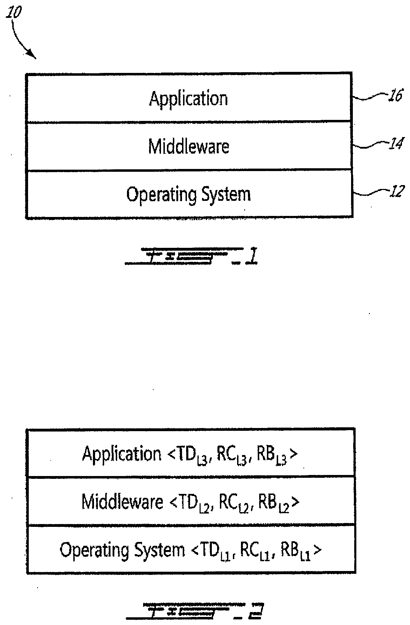

As HA systems become more commonplace for the support of important services such file sharing, internet customer portals, databases and the like, it has become desirable to provide standardized models and methodologies for the design of such systems. For example, the Service Availability Forum (SAF) has standardized application interface services (AIS) to aid in the development of portable, highly available applications. In particular, such services will be deliverable to systems, entities or nodes which operate having a layered (software) architecture. As shown in the conceptual architecture stack of Figure 1, such a layered architecture 10 can, for example, include an operating system 12, middleware 14 and an application 16, from the lowest layer to the highest layer. The reader interested in more information relating to the AIS standard specification is referred to Application Interface Specification (AIS), Software Management Framework (SMF), SAI-AIS-SMF-A.01.01, which is available at www.saforum.org.

Of particular interest for the present application is the Availability Management Framework (AMF), which is a software entity defined within the AIS specification, e.g., as specifications document SAI-AIS-AMF-B.03.01 from the Service Availability Forum™ and is also incorporated here by reference. According to the AIS specification, the AMF is a standardized mechanism for providing service availability by coordinating redundant resources within a cluster to deliver a system with no single point of failure. The AMF provides a set of application program interfaces (APIs) through which an AMF implementation compliant to this specification determines, among other things, the states of components within a cluster and the health of those components. The components are also provided with the capability to query the AMF for information about their state. An application which is developed using the AMF APIs and following the AMF system model leaves the burden of managing the availability of its services to the AMF. Thus, such an application does not need to deal with dynamic reconfiguration issues related to component failures, maintenance, etc.

Currently the SMF specification deals with the availability aspect of upgrades for entities of the AMF by defining the upgrade steps that are to be used to upgrade one or more AMF entities in a high availability system. More specifically, the current SMF specification defines the following ordered set of standard actions to be performed in order to upgrade an AMF entity:
1. Online installation of new software
2. Lock deactivation unit
3. Terminate deactivation unit
4. Offline uninstallation of old software
5. Modify information model and set maintenance status
6. Offline installation of new software
7. Instantiate activation unit
8. Unlock activation unit
9. Online uninstallation of old software
To better understand these upgrade actions, consider that 'online' installation or uninstallation refers to software which can be installed or uninstalled without disturbing or impacting the ongoing operation of any of the AMF entities in the system, including those entities being upgraded. Hence these online operations can be performed in advance of initiating the upgrade procedure in case of the installation, or after the upgrade procedure in the case of uninstallation. On the other hand, 'offline' installation or uninstallation refers to operations which may impact the behavior of some AMF entities and therefore, in order to maintain control of the system from the perspective of availability management, these impacted entities need to be taken offline, i.e. out-of-service, prior to initiating the upgrade procedure. Hence, the collection of these impacted entities that are taken offline for the upgrade step referred to in the SMF specification as the 'deactivation unit'.

To take the relevant entities offline, the deactivation unit is locked and then terminated (i.e., actions #2 and #3 above) during the upgrade, i.e., during the time that the uninstallation of the old software (action #4), the reconfiguration (action #5), and the installation of the new software (action #6) are being performed. The reconfiguration is performed by changing the information model in action #5 to reflect the new configuration into which the system is being upgraded. Due to the upgrade, the set of offline entities may have changed. Therefore, a second set of offline entities, i.e., the 'activation unit' is defined by the SMF specification. Entities associated with the of the activation unit are put back into service by unlocking them after instantiation. Once the online uninstallation has been completed, the old software is completely removed from the subsystem. For situations where no offline operation is required and the deactivation unit contains the same entities as the activation unit (i.e., a symmetric activation unit) that allow for a restart operation, a reduced set of actions is defined by the SMF specification, i.e.,:
1. Online installation of new software
2. Modify information model and set maintenance status
3. Restart symmetric activation unit
4. Online uninstallation of old software

According to the SMF specification, the afore-described upgrade steps are used in sequence in a rolling fashion across redundant entities (or subsystems) to maintain availability. The rolling upgrade procedure will execute the upgrade steps one by one on each subsystem until the complete target system has been upgraded. Each subsystem will have a pair of deactivation-activation units. The online and offline installation and uninstallation operations are specified for each software bundle, each of which delivers to the system the software for one or more entity types. The upgrade itself is interpreted as migration of an entity from one entity type to another. Through this relation each entity is associated with a software bundle.

WO 2004/010292 A may be construed to disclose an application model automates deployment of an application. The application model includes a static description of the application and a run-time description of the application. Deployment phases, such as installation, configuration and activation of the application are executed according to the application model.

However, as will be described below, these upgrade techniques have certain limitations and, accordingly, it would be desirable to provide new methods, devices, systems and software for upgrading systems having layered architectures.

### SUMMARY

Provided are a method and a node of the independent claims. Developments are seen in the dependent claims.

Preferably, a method for preparing an upgrade for a software subsystem having a plurality of layers includes the steps of: ordering upgrade operations for each of the layers of the software subsystem based upon at least one of runtime and installation dependencies between the plurality of layers, and storing the ordered upgrade operations associated with the layers of the software subsystem.

Preferably, a computer-readable medium contains instructions which, when executed by a computer or processor, prepare an upgrade of a software subsystem having a plurality of layers by the step of ordering upgrade operations for each of the layers of the software subsystem based upon at least one of runtime and installation dependencies between the plurality of layers.

Preferably, a node which can prepare an upgrade of a software subsystem having a plurality of layers includes a processor for ordering upgrade operations for each of the layers of the software subsystem based upon at least one of runtime and installation dependencies between the plurality of layers.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 illustrates a layered architecture;
Figure 2 illustrates a layered architecture labeled with upgrade action phases according to an exemplary embodiment;
Figure 3 is a table which identifies upgrade actions per layer for the exemplary layered architecture of Figure 2 according to an exemplary embodiment;
Figure 4 illustrates a general re-ordering of upgrade actions by phase according to an exemplary embodiment;
Figure 5 shows variations on re-ordering of upgrade actions based on dependenciesaccording to an exemplary embodiment;
Figure 6 is an exemplary node according to an exemplary embodiment, and
Figure 7 is a flowchart illustrating a method for upgrading a software subsystem according to an exemplary embodiment.

### DETAILED DESCRIPTION

The following description of the exemplary embodiments of the present invention refers to the accompanying drawings. The same reference numbers in different drawings identify the same or similar elements. The following detailed description does not limit the invention. Instead, the scope of the invention is defined by the appended claims.

When a system or subsystem has a layered architecture, typically there will be dependencies between the layers that should be taken into account at the time of the upgrade, and which pose additional ordering constraints (i.e., besides those necessary to maintain availability) for the upgrade. Such dependencies may not be satisfied by the sequential ordering of different steps necessary to upgrade each of the entities, or by accumulating all of the upgrade operations into a single step. For example, considering again the layered architecture shown in Figure 1, consider a software subsystem 10 that has an operating system 12 that runs a middleware implementation 14, which is in turn used by an application 16. The application 16 is likely to have a dependency on the version of the middleware implementation 14, which in turn might have a similar dependency on the version of the operating system 12. These dependencies can include runtime dependencies, e.g., dependencies between layers which are present when both layers are running, and/or installation dependencies, e.g., dependencies between layers which are present at the time of installation. It will be appreciated by those skilled in the art that other layers could be added (or layers removed) from the example shown in Figure 1, e.g., a hardware layer could be disposed beneath the operating system layer 12.

In such a system 10 having a layered architecture, if the operating system 12 needs to be upgraded such an upgrade should not be performed without considering all of the dependencies that the other software layers may have with respect to operating system 12. Typically, it will therefore be necessary to upgrade all of the layers 12, 14 and 16. Moreover, in some cases a higher layer may not be upgradeable at the same time as the lower layer(s), but instead its upgrade may need to be sequenced after the lower layer(s) has (have) been upgraded and, potentially, even after the lower layer(s) has (have) been re-activated, e.g., an operating system 12 may need to be up and running prior to installing upgraded AMF entities. These considerations are referred to herein as categorizing each upgrade operations as being either an upgrade operation which can be performed with the impacted entity(ies) being 'online' or an upgrade operation which needs to be performed with the impacted entity(ies) being 'offline'.

Additionally, in such a case, the different pieces of software associated with the different layers 12, 14 and 16 are likely to come from different software vendors, each of whom would typically provide an upgrade process for their own product. Thus, it is also desirable according to these exemplary embodiments to provide an upgrade method and system which combines the independent upgrade processes associated with different layers into a single upgrade step that can be used by, e.g., the SMF, to automatically manage the upgrade procedure in a high-availability system.

This can be accomplished by exemplary embodiments which order the upgrade operations for each of the layers of a software subsystem based upon runtime and installation dependencies between the layers, and which then perform the ordered upgrade operations on layers of software subsystem. For example, to order the upgrade operations based upon runtime and installation dependencies, the upgrade steps described above in the Background section can instead be reorganized into three phases: a tear-down (TD) phase, a reconfiguration (RC) phase and a rebuild (RB) phase. The tear-down phase includes those actions which occur when the current entities and their software are removed from the system. Using the same action numbering provided in the Background section, the tear-down phase could thus include (for the full action set):
2. Lock deactivation unit
3. Terminate deactivation unit
4. Offline uninstallation of old software
9. Online uninstallation of old software
For the reduced action set, i.e., for situations where no offline operation is required and the deactivation unit contains the same entities as the activation unit, the tear-down phase according to these exemplary embodiments can include only action #9.

The reconfiguration phase according to these exemplary embodiments includes those actions associated with the changing of the configuration of the current system to the new configuration, i.e. those entities that are removed permanently are also removed from the configuration model, new entities are added to the configuration and configuration changes are made to those entities that are upgraded, so these entities can be brought up (rebooted) according to the new configuration. Thus, the reconfiguration phase according to this exemplary embodiment includes only action #5 described above, i.e.:
5. Modify information model and set maintenance status
   for both the full and reduced sets of actions.

The rebuild phase according to these exemplary embodiments includes those actions associated with installing the software for the new configuration and instantiating (or re-instantiating) the appropriate entities using this software in the system. Thus, the rebuild phase according to this exemplary embodiment includes the following actions (for the full set of actions):
1. Online installation of new software
6. Offline installation of new software
7. Instantiate activation unit
8. Unlock activation unit
The rebuild phase for the reduced set of actions only includes action #1 and a restart action (replacing action #7) according to this exemplary embodiment.

According to these exemplary embodiments, the upgrade actions are thus performed by phase in the following order: tear-down phase, reconfiguration phase and rebuild phase, i.e., 2, 3, 4, 9, 5, 1, 6, 7 and 8 (for a full action set). Upon comparing the ordering of actions in the Background section with the (reorganized) ordering of actions according to these exemplary embodiments, it will be noted that in the ordering presented in the Background section, the actions associated with the tear-down and the rebuild phases according to these exemplary embodiments are interleaved with one another due to the online installation (uninstallation) operations. In high-availability system implementations, this interleaving plays a significant role in the amount time for which entities are taken out of service during the upgrade process. The ideal case is when the reduced upgrade step can be applied, i.e. the software can be installed/ removed without any disturbance and entities can simply be restarted. In other cases online operations are also necessary because the operations are executed remotely; therefore there is a need to remotely access the system during upgrades. For example, when the operating system is upgraded remotely if it requires an offline operation the remote control of the node may be completely lost and the remote upgrade becomes impossible.

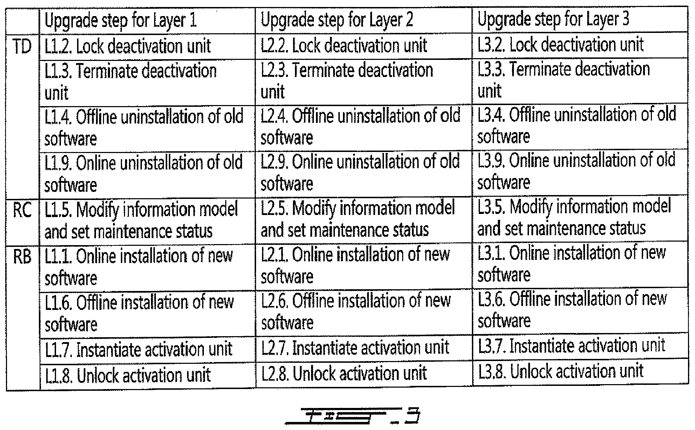

These considerations, as well as some of the benefits of performing upgrades using these techniques, will become more apparent with the discussion of the following example which steps through an exemplary upgrade process using the re-ordered actions described above. Initially consider again the subsystem of Figure 1 with each layer 12, 14 and 16 having its own upgrade process, e.g., provided by a different software vendor. Those individual upgrade processes can be broken down into the nine types of actions described above and the actions organized into the three phases according to these exemplary embodiments. To more easily follow the upgrade processing, the following layer notation will be used in this example. Layers = {L1, L2, L3,..., Ln}, where L1 is the lowest layer and Ln is the highest layer. Thus, for a given layer Ln an upgrade process can be defined as a tuple:UpgradeStep_{Ln} = <TD_{Ln}, RC_{Ln}, RB_{Ln}>, where TD_{Ln} is the tear-down phase of the upgrade step for layer Ln, RC_{Ln} is the reconfiguration phase for the layer Ln, and RB_{Ln} is the rebuild phase for the layer Ln. This notation is generally illustrated in Figure 2 and a table illustrating notation for each specific action within the three layers is provided as Figure 3.

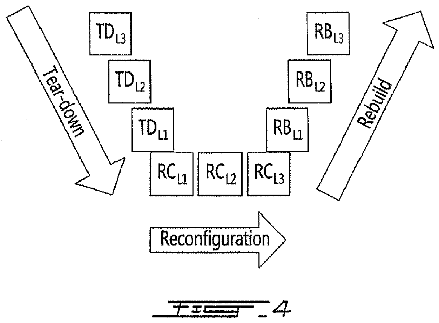

Upgrade actions according to these exemplary embodiments can be ordered (and then performed) by tearing down from highest to lowest layer, reconfiguring from lowest to highest layer and rebuilding from lowest to highest layer. This is shown conceptually in Figure 4, wherein the arrows represent the three phases of ordered actions according to this exemplary embodiment and the blocks represent each individual layer's associated actions within each phase. To provide a more specific (yet purely illustrative) example, the specific ordering of actions for the illustrative layered architecture of Figures 2 and 3 according to this exemplary embodiment would be:
< TD_{L3}, TD_{L2}, TD_{L1}> = < L3.2, L3.3, L3.4, L3.9, L2.2, L2.3, L2.4, L2.9, L1.2, L1.3, L1.4, L1.9>
<RC_{L1}, RC_{L2}, RC_{L3}> = <L1.5, L2.5, L3.5>
<RB_{L1}, RB_{L2}, RB_{L3}> = <L1.1, L1.6, L1.7, L1.8, L2.1, L2.6, L2.7, L2.8, L3.1, L3.6, L3.7, L3.8>
or, with the phases combined, the total action list can be performed in the following order: < {L3.2, L3.3, L3.4, L3.9, L2.2, L2.3, L2.4, L2.9, L1.2, L1.3, L1.4, L1.9}, {L1.5, L2.5, L3.5}, {L1.1, L1.6, L1.7, L1.8, L2.1, L2.6, L2.7, L2.8, L3.1, L3.6, L3.7, L3.8} >

Thus, such an upgrade process according to this exemplary embodiment will tear-down the current subsystem starting with the top layer and finishing with the lowest layer. During this tear down phase, the upgrade process will deactivate the entities layer by layer and completely remove the old software at the same time. Then the upgrade process will reconfigure the system starting with the bottom layer moving into the higher layers. This reconfiguration phase can, for example, be carried out as a single transaction (in which case the ordering becomes insignificant), since it is likely that the combinations of the old and new system configuration will result in errors. Since dependencies typically occur from higher layer toward a lower layer, following the ordering described herein will ensure that the layer reporting an error after a modification is the one reconfigured, and therefore corrected, in the next action. Finally, the upgrade process described above will rebuild the new subsystem starting with the lowest layer. During this rebuilding phase the new software is installed and the entities using this new software are instantiated and activated according to the new configuration.

It will be appreciated that, by re-ordering the upgrade actions in the manner described above according to these exemplary embodiments, the interleaving of those actions which is performed using the conventional ordering described in the Background section is undone. According to another exemplary embodiment, since an online operation can typically be turned into an offline operation and performed together with that offline operation, a further combination of upgrade actions can be performed. For example, in the foregoing example, actions #4 and #9 can be merged into a new modified action, referred to herein as action '4*', that is, action #9 is performed at the time of action #4. Similarly, actions #1 and #6 can be merged into a new, modified action referred to herein as action '6*', reflecting that action #1 is performed at the time of action #6. Thus, the tear-down phase and rebuild phase according to this exemplary embodiment can then be ordered as follows:
Modified tear-down phase:
   2 Lock deactivation unit
   3 Terminate deactivation unit
   4* Offline uninstallation of old software and online uninstallation of old software
Modified rebuild phase:
   6* Online installation of new software and offline installation of new software 7 Instantiate activation unit
   8 Unlock activation unit
If these merged actions were performed for the previous example, then the complete list of ordered actions would then be:
   <TD_{L3}, TD_{L2}, TD_{L1}> = < L3.2, L3.3, L3.4*, L2.2, L2.3, L2.4*, L1.2, L1.3, L1.4*>,
   where L3.4* is the sequence of <L3.4, L3.9> executed at the time of L3.4 (thereby avoiding interleaving), and L2.4* and L1.4* are similar modifications for layers 2 and 1, respectively; and
   <RB_{L1}, RB_{L2}, RB_{L3} > = <L1.6*, L1.7, L1.8, L2.6*, L2.7, L2.8, L3.6*, L3.7, L3.8>, where L1.6* is the sequence of <L1.1, L1.6> executed at the time of L1.6 (thereby avoiding interleaving), and L2.6* and L3.6* are similar modifications for layers 2 and 3.

One benefit associated with re-ordering the upgrade actions as described above is that this particular re-organization of action satisfies all of the possible dependencies among the layers, i.e., since the layers are torn down and then rebuilt in proper order, the old software is completely removed as soon as its entities are terminated, and the new software is installed only after the software of the underlying layer has been installed and activated. This exemplary embodiment also provides a complete separation of the tear-down and rebuilding phases, which may be important for example if the software is attached physically to the hardware and the hardware needs to be removed, added or replaced during the upgrade as these can be considered as installation and uninstallation operations of the bottom layer. However, the resulting order of upgrade actions described in the exemplary embodiment above, i.e., < {L3.2, L3.3, L3.4, L3.9, L2.2, L2.3, L2.4, L2.9, L1.2, L1.3, L1.4, L1.9}, {L1.5, L2.5, L3.5}, {L1.1, L1.6, L1.7, L1.8, L2.1, L2.6, L2.7, L2.8, L3.1, L3.6, L3.7, L3.8} >, i.e., with no interleaving of actions between phases, may not be the optimal re-ordering for all layered architectures and/or upgrades and will, instead, vary according to other exemplary embodiments. For example, this particular re-ordering would not apply to an upgrade which uses the reduced set of actions, since the reduced set of actions does not provide for offline operations at all. In many cases however such a reduced set of actions can be unfolded into the standard set of actions by converting the restart operation into a termination followed by instantiation.

Moreover, using this re-ordering with no interleaving according to the afore-described exemplary embodiment also means that the top layer entities are offline for the complete uninstallation-installation time of all the layers, i.e., for the longest possible time during the upgrade process. This may adversely impact availability. Additionally, it may not be possible to convert all upgrade processes into this exemplary re-ordering of actions. For example, in the case of an upgrade of an operating system, the old operating system provides the access required for the installation of its new version; hence online installation is unavoidable and cannot be converted into offline installation. Note however that since the lowest layer has no further dependencies, if the reduced set of upgrade actions is defined for this layer, the action can remain interleaved and the reduced set does not need to be changed. Another consideration relating to the afore-described re-ordering is that this re-ordering removes the old software completely as soon as possible from the system. This means that if the upgrade procedure fails, then the old software needs to be re-installed completely from scratch, which increases the repair time. Thus, according to some other exemplary embodiments which will now be described, it may be desirable to re-order the upgrade actions described in the Background section in a manner which will retain some interleaving of the online operations.

Thus, to avoid some of the potential disadvantages associated with using uninterleaved actions for some upgrade processes, the following exemplary embodiment provides for some interleaving. Herein, although the actions are once again discussed with respect to the three phases used above, it will be appreciated that these phases will no longer be homogeneous with respect to the actions, since some of the actions of one phase are now interleaved with actions from another phase. In this exemplary embodiment, the re-ordering may be formulated as:
InterleavedEmbeddedUpgardeStep = < <TD*_{Ln} , ..., TD*_{L2}, TD*_{L1}>, <RC_{L1}, RC_{L2}, ..., RC_{Ln}>, <RB*_{L1}, RB*_{L2} ,..., RB*_{Ln}> >, where
TD*_{Lx} is the sequence of actions of the tear-down phase interleaved with the online installation action of the rebuilding phase;
RB*_{Lx} is the sequence of actions of the rebuilding phase interleaved with the online uninstallation action of the tear-down phase; and
RC_{Lx} is the sequence of actions of the reconfiguration phase.

According to this second exemplary embodiment, and using the exemplary layered architecture described above with respect to Figures 2-4, the re-ordered set of upgrade actions for the layered architecture can be expressed as follows: < {*L3*.*1*, L3.2, L3.3, L3.4, *L2.1*, L2.2, L2.3, L2.4, *L1.1*, L1.2, L1.3, L1.4}, {L1.5, L2.5, L3.5}, {L1.6, L1.7, L1.8, *L1.9*, L2.6, L2.7, L2.8, *L2.9*, L3.6, L3.7, L3.8, *L3.9*} >. Therein, the different phases are separated by curly brackets and the interleaved actions from different phases are shown in italics. It can be seen in this set of upgrade actions, however, that if there are any dependencies between the online installation actions of the different layers, then this ordered set of actions will not work properly as it installs the software of a higher layer before the lower layer installation has been completed. In addition, since the entities of the higher layer are already taken offline when the online installation of a lower layer occurs, from an availability perspective, there is no gain compared to the re-ordered set of actions described in the previous exemplary embodiment.

Regarding the uninstallation actions, their ordering may not be as important for some upgrades as the ordering of the installation actions (from an operation perspective), since the software is not used in the subsystem after the entities of the appropriate layer are deactivated. However, from an availability perspective the same considerations apply for uninstallations as for the online installations. Thus, the upgrade actions should be re-organized so that (a) dependencies between layers can be satisfied and (b) the time that higher layer entities are taken out of service is minimized, i.e., all the online installations should be performed as early as possible in the upgrade process while all online uninstallation actions are performed as late as possible.

With respect to satisfying dependencies between layers, for the cases where the online installation of an upper layer requires the online installation of the lower layer, but does not require that the new lower layer software be running, exemplary embodiments can re-order the upgrade actions such that these online installation actions occur as interleaved actions within the tear-down phase. If, however, the entities need to be instantiated too, interleaving of these actions will not typically be possible. Thus, to satisfy the ordering of the installations in this case, an online installation action associated with an upper layer can be added to the action of online installation of the layer below that upper layer. Since this portion of the discussion focuses on dependent layers there will always be one such sequence. For example, upgrade action L3.1 can be added to upgrade action L2.1, which in turn can be appended to upgrade action L1.1, thereby forming the sequence <L1.1, L2.1, L3.1>. According to these exemplary embodiments, the upgrade actions associated with independent layers can be performed in independent steps. In case the online installations are independent from the layering, but the offline installations are not, exemplary embodiments may generate a number of such ordered sequences as part of the process of re-ordering or reorganizing the upgrade actions.

With respect to minimizing the time that higher layer entities are taken out of service during an upgrade process, one way to satisfy this criteria is to move the online installation operations of the lower layers to the higher layers and execute them as early as possible. The extent to which this is possible depends on the scope of impact of these operations. An online operation by definition should not impact any running entity's behavior within the subsystem. However, if the operations were classified as 'online' with respect to their own layer only and without considering the complete layered architecture, this may not be the case. Therefore, an online operation of a lower layer can be moved to the online operation of the higher layer only if the operation does not impact additional entities. In other words, if its 'online' status does not assume the deactivation unit of the upper layer, i.e. it has no impact on any of the entities of the deactivation unit of that layer, then that action can be moved as part of the re-ordering.

A worst case scenario for the re-ordering of upgrade actions occurs when none of online installations of the lower layers involved in an upgrade are true online operations and they cannot be moved to the higher layers. Therefore the higher layer operations need to be moved to the lowest layer's online operation to satisfy the installation ordering, which also turns them effectively into offline operations with respect to the entities of their own layer. This, for the exemplary layered architecture of Figures 2-4, results in the following installation actions interleaved with the tear-down phase:
{L3.2, L3.3, L3.4, L2.2, L2.3, L2.4, *L1.1*, *L2.1*, *L3.1*, L1.2, L1.3, L1.4}
Thus, in this example, first the higher layers of the layered architecture are torn down until the lowest layer is reached without performing any installation. At this point, after the online installation of the lowest layer, the online installations of the other layers are performed according to the layering. Finally, the lowest layer is torn down.

Reordering of upgrade actions according to this exemplary embodiment performs better when the online installations of all the layers of a layered architecture are true online operations and do not impact any entity in the subsystem. In this case these actions can be moved to the online installation of the top layer. This, for the exemplary layered architecture of Figures 2-4, results in the following tear-down phase actions:
{*L1.1*, *L2.1, L3.1,* L3.2, L3.3, L3.4, L2.2, L2.3, L2.4, L1.2, L1.3, L1.4}
Thus the online installation actions are executed first from the lowest layer to the top layer, followed by the tear-down actions starting with the top layer. This sequence takes the impacted entities offline for the shortest time, and therefore it is the most desirable.

Between these best and worst case scenarios, reordering of the upgrade actions according to this exemplary embodiment may also be implemented for layered architectures wherein the lower layer installations are online installation with respect to the lower layers, but not with respect to all layers. In this case there is an intermediate solution which occurs by moving their online installation up as much possible and turning the higher layer online installations into offline installations. This exemplary embodiment will also shorten the time for which lower layer entities are taken offline, e.g., relative to uninterleaved upgrade actions, although if these entities are not significant from the perspective of availability this gain may not be significant. For example, with respect to the exemplary layered architecture of Figures 2-4, this could result in the following ordered actions:
{L3.2, L3.3, L3.4, *L1.1*, *L2.1*, *L3.1*, L2.2, L2.3, L2.4, L1.2, L1.3, L1.4}.

Having now discussed online installations with respect to the teardown phase, the discussion now continues to online uninstallations with respect to the rebuilding phase. The ordering of these upgrade actions according to the layering of the architecture being upgraded does not need to be taken into account since the offline uninstallations have already taken place and the software cannot be used any more. The issue that needs to be considered however, is whether the uninstallations for a particular upgrade can be postponed until the upgrade procedure has been completed thereby reducing the time entities need to be taken offline and also reducing any recovery time in case of a failure during the upgrade. Note that in case of a failure, which results in a rollback of the upgrade process, the recovery is performed by undoing the upgrade actions which have been performed to that point in the upgrade process one by one in reverse order. This means the execution of an online re-installation to reverse the online uninstallation action. Thus, the software dependency will pose a similar ordering constraint as discussed above for the online installation, and thus this dependency should be considered for the online uninstallation as well. As a result the considerations for the online uninstallation can be considered to be exactly the same as those taken into account for the online installation according to this exemplary embodiment, which results in the combination of all online uninstallation into single actions that execute the uninstallations in reverse order to the layering. The combined online uninstallation(s) should also be moved up to the next level of upgrade actions associated with the layered architecture, if possible, e.g., if it does not impact any of the entities of the activation unit of that level, i.e. it does not assume those entities to be offline.

The worst case scenario associated with reordering upgrade actions in this manner will occur when none of the online uninstallations of the lower layers of a given layered architecture being upgraded are true online operations and they, therefore, cannot be moved to the higher layers. Thus the higher layer operations need to be moved to the lowest layer, which also turns them effectively into offline operations with respect to the entities of their own layer. Using again, the illustrative layered architecture of Figures 2-4, this would result in the following uninstallation actions being interleaved with the rebuild phase and reordered as follows:
{ L1.6, L1.7, L1.8, *L3.9*, *L2.9*, *L1.9*, L2.6, L2.7, L2.8, L3.6, L3.7, L3.8 }
Thus, in this case during the upgrade according to this exemplary embodiment, first the lowest layer is rebuilt, followed by the online uninstallations starting at the highest layer, then followed by the lower layers according to the layering. Then all of the remaining layers are executed from the bottom layer up to the top according to the layering.

Reordering of upgrade actions according to this exemplary embodiment performs better when the online uninstallations of all the layers are true online operations and do not impact any entity in the subsystem. In this case these upgrade actions may then all be moved to the online uninstallation of the top layer. For the exemplary layered architecture of Figures 2-4 result in the following rebuild phase actions:
{ L1.6, L1.7, L1.8, L2.6, L2.7, L2.8, L3.6, L3.7, L3.8, *L3.9*, *L2.9*, *L1.9* }
Thus, rebuild actions are executed first for all the layers one by one until the top layer. Then the online uninstallation actions are executed starting with the highest layer and ending with the bottom layer.

Between the best and worst case scenarios for reordering according to this exemplary embodiment lie intermediate solutions which occur when the lower layer uninstallations associated with a particular layered architecture are online uninstallations with respect to the lower layers, but not with respect to all of the layers of that architecture. In such a case, this exemplary embodiment reorders the upgrade actions by moving the online uninstallations up as much possible based upon the determined dependencies and turning the higher layer online uninstallations into offline uninstallations. Again, using the exemplary layered architecture of Figures 2-4, the re-ordering according to this exemplary embodiment could result in the following reordered set of upgrade actions:
{ L1.6, L1.7, L1.8, L2.6, L2.7, L2.8, *L3.9*, *L2.9*, *L1.9*, L3.6, L3.7, L3.8 }

To summarize some of the aspects of the reordering of upgrade actions according to the foregoing exemplary embodiments, each online operation associated with an upgrade process can be interleaved with actions of the opposite phase according to these exemplary embodiments if there is no requirement that the lower layer software be running during that operation. Otherwise that online operation is turned into an offline operation and moved into its appropriate (non-interleaved) phase. Since the bottom layer in a layered architecture does not have further layering dependency, its online operations can always be left interleaved at that layer. To satisfy the layering dependency at installation, the online installation operations should be executed according to the layering. For installation this means that the bottom layer's online installation needs to be executed first continuing with each successive layer above the bottom layer.

In case of rollback, the uninstallation operations are reversed into installations, thus they have to satisfy the same criteria as the installation operations. Therefore, for the uninstallation this means performing upgrade actions in the opposite order as described above with respect to installation operations, i.e., starting with the operation for the top layer and completing with the one at the bottom, as this would provide the bottom to top ordering at rollback. Thus, for all of the cases described above, one can define a single combined online action, which is the ordered set of actions for each of the layers which covers all the layers of the subsystem and satisfies all of the dependencies.
OnlineInstallation = < L1.1, L2.1, ..., Ln.1 >
OnlineUninstallation = < Ln.9, ..., L2.9, L1.9 >
The OnfineInstallation sequence is executed at the latest at the online installation action of the bottom layer, i.e., at the time of the L1.1 action. However, ideally it is pushed up to one of the higher layers where these actions will not impact any running entity and even more ideally it is pushed all the way to the top, i.e. to the original position of the online installation operation of the top layer Ln.1.

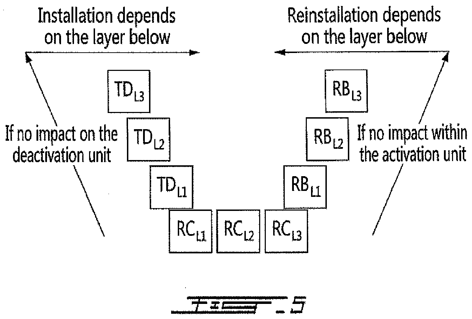

Similarly, the OnlineUninstallation sequence is executed at the earliest time during the online uninstallation of the bottom layer, i.e. at the time of the L1.9 action. However, it is also desirable to push the OnlineUninstallation sequence up toward the top layer to the extent possible such that these actions will not impact any running entity and, ideally, all the way to the top layer, i.e. to the original position of the online installation operation of the top layer Ln.9, in which case the time for which entities are taken offline is the minimal. This set of concepts is illustrated as Figure 5.

According to other exemplary embodiments, it may be possible in some cases to further reduce the total number of actions performed in an upgrade of a layered architecture subsystem by merging the upgrade action(s) of one layer with the upgrade action(s) of another layer. Consider that a primary reason for having the deactivation unit described above is to isolate impacted entities from the rest of the system in order to support availability management during an upgrade. The upgrade impact which necessitates this isolation can result from either (or both of) an offline installation operation or an offline uninstallation operation. Since these operations may be present for each layer for both the tear-down and rebuilding phases, in order to reduce the number of layers it can be investigated whether it is possible to include the individual upgrade actions of one layer in the upgrade actions of another layer.

In the layered architectures considered herein, it is likely that the deactivation unit of a lower layer includes all the entities of the deactivation unit of the higher layer. This means that most of the operations that require the deactivation of the entities at the higher layer can also be carried out if the entities of the deactivation unit of the lower layer are deactivated. An exception to this conclusion occurs when an operation at the higher layer requires the presence of any of entities deactivated at the lower layer. For similar reasons, it is likely that offline installation operations will also have such a dependency. Thus, with respect to the ongoing example described above with respect to Figures 2-4, exemplary embodiments can determine whether some of the offline operations, marked in bold below, can be merged together (italics refer to online operations which are not considered for this merger of actions discussion).
*<* {*L3.1,* L3.2, L3.3, **L3.4,** *L2.1*, L2.2, L2.3, **L2.4,** *L1.1*, L1.2, L1.3, **L1.4**}, {L1.5, L2.5, L3.5}, {**L1.6,** L1.7, L1.8, *L1.9*, **L2.6,** L2.7, L2.8, *L2.9*, L3.6, L3.7, L3.8, *L3.9*} *>*

Under certain circumstances exemplary embodiments can, for example, turn the above sequence of actions into the following sequence, thus, eliminating the lock and terminate actions of layer 3:
< {<*L3*.*1*, *L2.1*>, L2.2, L2.3, <L3.4, L2.4>, *L1.1*, L1.2, L1.3, L1.4}, {L1.5, L2.5, L3.5}, {L1.6, L1.7, L1.8, *L1.9*, <L2.6, L3.6>, L2.7, L2.8, *<L2.9, L3.9*> } >
Since the lock in the removed upgrade L3.2 action would protect the system from the impacts of upgrade actions L3.4 and L3.6 all the way until the L3.8 action, this merge can only be performed if the same protection is provided by the lock in upgrade action L2.2, which will be provided until upgrade action L2.8. This means that (a) the deactivation unit of upgrade action L2.2 should take offline all the entities that are taken offline by upgrade action L3.2, and that (b) upgrade action L3.6 does not depend on any entity put back into service by L2.8. To satisfy the rollback scenario another set of prerequisites for this exemplary merger of actions can also be that: (a) the activation unit of upgrade action L2.8 should take online all of the entities that are taken online by upgrade L3.2, and that (b) the undoing of upgrade action L3.4 does not depend on any entity taken offline by upgrade action L2.2. Note that during rollback the deactivation unit and the activation unit swap roles and the last condition mentioned above refers to the offline re-installation of the old software to which the rollback is reverting the subsystem.

Accordingly, in general, an upgrade of an upper layer can be merged with the upgrade of the layer below it according to this exemplary embodiment if all of the following are satisfied: (a) the deactivation unit of the lower layer includes all the entities of the deactivation unit of the upper layer, (b) the activation unit of the lower layer includes all the entities of the activation unit of the upper layer, (c) the offline installation action (of the new software) of the upper layer does not depend on any entity in the activation unit of the lower layer, and (d) the offline installation action of the old software of the upper layer does not depend on any entity in the deactivation unit of the lower layer. When merging offline installation and offline uninstallation operations, respectively, the same ordering should be observed as for the online operations, i.e. installations start with the lower layer and moves upward with uninstallations following the reverse order of the layering. As each of the above merging rules apply within their own phase, the upgrade step according to these exemplary embodiments does not need to be symmetric and even the reduction may be asymmetric. Note that while the reduction of layers described here can simplify upgrade processes according to exemplary embodiments and may reduce their processing time, applying this technique is optional.

As will be appreciated by the foregoing discussion, exemplary embodiments provide for independently defined upgrade steps for software used in a layered architecture to be merged together into an embedded upgrade step. The dependencies (runtime and/or installation dependencies) associated with the layered architecture to be upgraded can be analyzed. Based on the determined dependencies, exemplary embodiments can then determine whether and how the online operations associated with the different layers can be performed during the embedded upgrade step. As discussed above, the outcome of this latter determining step can include the determination that (a) no online operation may be interleaved, (b) online operations can be interleaved at the bottom layer, (c) online operations can be interleaved at the top layer, or (d) online operations can be interleaved at an intermediate layer. Using this determination, the combined installation/uninstallation upgrade steps can be re-ordered such that (a) for installation following the layering starting from the lowest layer and up and (b) for uninstallation following the layering in reverse starting from the top layer and toward the bottom. Once a reordering of the upgrade steps has been determined, an optional step may be performed to reduce the number of actions by applying the layer reduction technique described above.

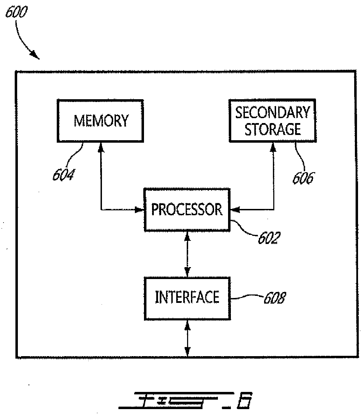

The foregoing exemplary embodiments describe methods, systems, devices and software for embedding upgrade steps associated with layered architectures. An exemplary node 600 on which such a layered architecture can operate is illustrated as Figure 6. Therein, node 600 contains a processor 602 (or multiple processor cores), memory 604, one or more secondary storage devices 606 and an interface unit 608 to facilitate communications between node 600 and the rest of the network, e.g., an availability management node which is controlling the upgrade of node 600 or other nodes having layered architectures which are being managed for high availability. Alternatively, node 600 can represent a node on which the availability manager resides, e.g., which coordinates the upgrading of layered architectures on the same or other nodes as described above.

It will be appreciated by those skilled in the art that the foregoing exemplary embodiments describe various techniques for re-ordering or reorganizing upgrade actions which are subsequently performed to upgrade a layered architecture of software, e.g., from an older version of that software to a more recent version. This re-ordering can, for example, be performed by an SMF implementation operating on a node 600. Such an SMF implementation may, or may not, also be responsible for actually performing the upgrade using the re-ordered upgrade actions, i.e., the evaluation and specification of the upgrade steps (or upgrade campaign) can be performed separately (in terms of the physical entities involved and/or the time of performance) from the upgrade itself. The re-ordered upgrade steps may, for example, be determined by the SMF implementation, stored and/or transmitted to another entity or node 600 which is responsible for actually performing the upgrade. If stored, the upgrade steps may comprise an ordered list, e.g., ranked in order of performance as described above.

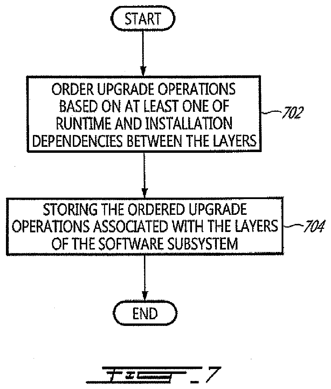

A method for preparing an upgrade of a software subsystem having a plurality of layers is illustrated in the flowchart of Figure 7. Therein, upgrade operations for each of the layers of the software subsystem are ordered based upon at least one of runtime and installation dependencies between the plurality of layers at step 702. Then, optionally, the ordered upgrade operations associated with the layers are stored, e.g., in the order determined based upon the dependencies, at step 704. Alternatively, after preparing the upgrade by ordering the upgrade steps, the upgrade process can be performed in the determined order. As will be appreciated by those skilled in the art, methods such as that illustrated in Figure 7 can be implemented in software.Thus, systems and methods for processing data according to exemplary embodiments of the present invention can be performed by one or more processors executing sequences of instructions contained in a memory device. Such instructions may be read into the memory device 604 from other computer-readable mediums such as secondary data storage device(s) 606, which may be fixed, removable or remote (network storage) media. Execution of the sequences of instructions contained in the memory device causes the processor to operate, for example, as described above. In alternative embodiments, hard-wire circuitry may be used in place of or in combination with software instructions to implement the present invention.

The foregoing description of exemplary embodiments of the present invention provides illustration and description, but it is not intended to be exhaustive or to limit the invention to the precise form disclosed. Modifications and variations are possible in light of the above teachings or may be acquired from practice of the invention. The following claims define the scope of the invention.

## Claims

1. A method for preparing an upgrade for a software subsystem having a plurality of layers (12,14,16; 22, 24, 26) comprising:
- ordering (702) upgrade operations for each of said layers of said software subsystem based upon installation dependencies between said plurality of layers and runtime,
comprising:
-- grouping at least some of said upgrade operations into a teardown phase, a reconfiguration phase and a rebuilding phase, wherein i) the teardown phase includes those operations which occur when current entities and their software are removed from the software subsystem, ii) the reconfiguration phase includes those operations associated with changing of the configuration of the current software subsystem to a new configuration and iii) the rebuilding phase includes those operations associated with installing software for the changed configuration and instantiating or re-instantiating the appropriate entities using the changed software in the software subsystem;
-- interleaving, for each of said layers, an online upgrade operation associated with a respective one of said teardown and rebuilding phases with operations associated with the other of said teardown and rebuilding phases if lower layers need not be running during said online upgrade operation, wherein the ordering step with no interleaving means that top layer entities are offline for the complete uninstallation/ installation time of all of the plurality of layers; and
-- otherwise, turning said online upgrade operation into an offline upgrade operation and performing said offline upgrade operation with other operations grouped in a same phase;
and
- storing (704) said ordered upgrade operations associated with said layers of said software subsystem, wherein
the online upgrade operation refers to software which is installable or uninstallable without
disturbing or impacting the ongoing operation of one or more entities in the subsystem,
and
the offline upgrade operation refers to operations which impact the behavior of the one or more entities.

2. The method of claim 1, wherein said plurality of layers include an application layer (16;26), a middleware layer (14;24) and an operating system layer (12;22).

3. The method of claim 1, wherein said upgrade operations include a plurality of:
online installation of new software, locking of a deactivation unit, terminating said deactivation unit, offline uninstallation of old software, modifying an information model and setting a maintenance status, offline installation of new software, instantiating an activation unit, unlocking said activation unit and online uninstallation of said old software.

4. The method of claim 1, wherein said step of ordering further comprises determining that either: (a) no online operation may be interleaved, (b) online operations can be interleaved at a bottom one of said plurality of layers, (c) online operations can be interleaved at a top one of said plurality of layers, or (d) online operations can be interleaved at an intermediate one of said plurality of layers.

5. The method of claim 1 further comprising the step of:
- performing said upgrade operations in an order determined by said ordering step.

6. A computer-readable medium comprising code portions which, when executed on a processor, configure the processor to perform all steps of a method according to any one of the preceding method claims.

7. A node (600) which can prepare an upgrade to a software subsystem having a plurality of layers (12, 14, 16; 22, 24, 26), said node comprising:
a processor (602) configured to:
- order upgrade operations for each of said layers of said software subsystem based upon installation dependencies between said plurality of layers and runtime, comprising:
- grouping at least some of said upgrade operations into a teardown phase, a reconfiguration phase and a rebuilding phase, wherein i) the teardown phase includes those operations which occur when current entities and their software are removed from the software subsystem, ii) the reconfiguration phase includes those operations associated with changing of the configuration of the current software subsystem to a new configuration and iii) the rebuilding phase includes those operations associated with installing software for the changed configuration and instantiating or re-instantiating the appropriate entities using the changed software in the software subsystem;
- interleaving, for each of said layers, an online upgrade operation associated with a respective one of said teardown and rebuilding phases with operations

8. The node of claim 7, wherein said plurality of layers include an application layer (16; 26), a middleware layer (14; 24) and an operating system layer (12; 22).

9. The node of claim 7, wherein said upgrade operations include a plurality of:
online installation of new software, locking of a deactivation unit, terminating said deactivation unit, offline uninstallation of old software, modifying an information model and setting a maintenance status, offline installation of new software, instantiating an activation unit, unlocking said activation unit and online uninstallation of said old software.

10. The node of claim 7, wherein processor is configured to order said upgrade operations by determining that either: (a) no online operation may be interleaved, (b) online operations can be interleaved at a bottom one of said plurality of layers, (c) online operations can be interleaved top one of said plurality of layers, or (d) online operations can be interleaved at an intermediate one of said plurality of layers.

11. The node of claim 7, wherein said processor is also configured to perform said upgrade operations in an order determined by said ordering operation.

## Patentansprüche

1. Verfahren zum Vorbereiten einer Aktualisierung für ein Softwareuntersystem mit einer Vielzahl von Schichten (12, 14, 16; 22, 24, 26), umfassend:
- Ordnen (702) von Aktualisierungsvorgängen für jede der Schichten in dem Softwareuntersystem auf der Grundlage von Installationsabhängigkeiten zwischen der Vielzahl von Schichten und der Laufzeit, umfassend:
-- Gruppieren von zumindest einigen der Aktualisierungsvorgänge in eine Teardown-Phase, eine Rekonfigurationsphase und eine Neuaufbauphase, wobei i) die Teardown-Phase jene Vorgänge umfasst, die auftreten, wenn gegenwärtige Funktionseinheiten und deren Software aus dem Softwareuntersystem entfernt werden, ii) die Rekonfigurationsphase jene Vorgänge umfasst, die mit einer Änderung der Konfiguration des momentanen Softwareuntersystems hin zu einer neuen Konfiguration assoziiert sind, und iii) die Neuaufbauphase jene Vorgänge umfasst, die mit einem Installieren von Software für die geänderte Konfiguration und einem Instanzüeren oder Neuinstanziieren der geeigneten Funktionseinheiten unter Verwendung der geänderten Software in dem Softwareuntersystem assoziiert sind;
-- Verschachteln, für jede der Schichten, eines Onlineaktualisierungsvorgangs, der mit einer jeweiligen der Teardown- und Neuaufbauphase assoziiert ist, mit Vorgängen, die mit der anderen der Teardown- und Neuaufbauphase assoziiert sind, falls niedrigere Schichten während des Onlineaktualisierungsvorgangs nicht laufen müssen, wobei der Ordnungsschritt ohne Verschachtelung bedeutet, dass Funktionseinheiten der obersten Schicht für die komplette Deinstallations-/Installationszeit für alle der Vielzahl von Schichten offline sind; und
-- andernfalls, Umwandeln des Online-Aktualisierungsvorgangs in einen Offline-Aktualisierungsvorgang und Durchführen des Offline-Aktualisierungsvorgangs mit anderen Vorgängen, die in einer selben Phase gruppiert sind; und
- Speichern (704) der geordneten Aktualisierungsvorgänge, die mit den Schichten des Softwareuntersystems assoziiert sind, wobei
der Online-Aktualisierungsvorgang sich auf Software bezieht, die ohne eine Störung oder Beeinflussung des gerade stattfindenden Vorgangs von einer oder mehreren Funktionseinheiten in dem Untersystem installierbar oder deinstallierbar ist, und
der Offline-Aktualisierungsvorgang sich auf Vorgänge bezieht, die das Verhalten der einen oder mehreren Funktionseinheiten beeinflussen.

2. Verfahren gemäß Anspruch 1, wobei die Vielzahl von Schichten eine Anwendungsschicht (16; 26), eine Middleware-Schicht (14, 24) und eine Betriebssystemschicht (12; 22) umfasst.

3. Verfahren gemäß Anspruch 1, wobei die Aktualisierungsvorgänge eine Vielzahl umfassen aus: Online-Installation neuer Software, Sperren einer Deaktivierungseinheit, Terminieren der Deaktivierungseinheit, Offline-Deinstallation alter Software, Modifizieren eines Informationsmodells und Setzen eines Wartungsstatus, Offline-Installation neuer Software, Instanziieren einer Aktivierungseinheit, Entsperren der Aktivierungseinheit und Online-Deinstallation der alten Software.

4. Verfahren gemäß Anspruch 1, wobei der Schritt des Ordnens weiterhin ein Bestimmen umfasst, dass entweder: (a) kein Onlinevorgang verschachtelt werden darf, (b) Onlinevorgänge bei einer untersten der Vielzahl von Schichten verschachtelt werden dürfen, (c) Onlinevorgänge bei einer obersten der Vielzahl von Schichten verschachtelt werden dürfen, oder (d) Onlinevorgänge bei einer zwischenliegenden der Vielzahl von Schichten verschachtelt werden dürfen.

5. Verfahren gemäß Anspruch 1, weiterhin umfassend den Schritt des:
- Durchführens der Aktualisierungsvorgänge in einer Reihenfolge, die durch den Ordnungsschritt bestimmt ist.

6. Computerlesbares Medium, das Codeabschnitte umfasst, die bei Ausführung auf einem Prozessor den Prozessor konfigurieren, um alle Schritte eines Verfahrens gemäß zumindest einem der vorangegangenen Verfahrensansprüche durchzuführen.

7. Knoten (600), der eine Aktualisierung eines Softwareuntersystems mit einer Vielzahl von Schichten (12, 14, 16; 22, 24, 26) vorbereiten kann, wobei der Knoten umfasst:
einen Prozessor (602), der konfiguriert ist, um:
- Aktualisierungsvorgänge für jede der Schichten des Softwareuntersystems auf der Grundlage von Installationsabhängigkeiten zwischen der Vielzahl von Schichten und der Laufzeit zu ordnen, umfassend:
-- Gruppieren von zumindest einigen der Aktualisierungsvorgänge in eine Teardown-Phase, eine Rekonfigurationsphase und einer Neuaufbauphase, wobei i) die Teardown-Phase jene Vorgänge umfasst, die auftreten, wenn gegenwärtige Funktionseinheiten und deren Software aus dem Softwareuntersystem entfernt werden, ii) die Rekonfigurationsphase jene Vorgänge umfasst, die mit einer Änderung der Konfiguration des momentanen Softwareuntersystems hin zu einer neuen Konfiguration assoziiert sind, und iii) die Neuaufbauphase jene Vorgänge umfasst, die mit einer Installierung von Software für die geänderte Konfiguration und einem Instanzüeren oder Neuinstanziieren der geeigneten Funktionseinheiten unter Verwendung der geänderten Software in dem Softwareuntersystem assoziiert sind;
-- Verschachteln, für jede der Schichten, eines Online-Aktualisierungsvorgangs, der mit einer jeweiligen der Teardown- und Neuaufbauphasen assoziiert ist, mit Vorgängen, die mit der anderen der Teardown- und Neuaufbauphase assoziiert sind, falls niedrigere Schichten während des Online-Aktualisierungsvorgangs nicht laufen müssen, wobei das Ordnen ohne Schachtelung bedeutet, dass Funktionseinheiten der obersten Schicht für die komplette Deinstallations-/Installationszeit für alle der Vielzahl von Schichten offline sind; und
-- andernfalls, Umwandeln des Online-Aktualisierungsvorgangs in einen Offline-Aktualisierungsvorgang und Durchführen des Offline-Aktualisierungsvorgangs mit anderen Operationen, die in einer selben Phase gruppiert sind; und
- die geordneten Aktualisierungsvorgänge, die mit den Schichten des Softwareuntersystems assoziiert sind, in einer Speichervorrichtung (604) zu speichern, wobei:
der Online-Aktualisierungsvorgang sich auf Software bezieht, die ohne eine Störung oder Beeinflussung des gerade stattfindenden Vorgangs von einer oder mehreren Funktionseinheiten in dem Untersystem installiert oder deinstalliert werden kann, und
der Offline-Aktualisierungsvorgang sich auf Vorgänge bezieht, die das Verhalten der einen oder mehreren Funktionseinheiten beeinflussen können.

8. Knoten gemäß Anspruch 7, wobei die Vielzahl von Schichten eine Anwendungsschicht (16; 26), eine Middleware-Schicht (14; 24) und eine Betriebssystemschicht (12; 22) umfasst.

9. Knoten gemäß Anspruch 7, wobei die Aktualisierungsvorgänge eine Vielzahl umfassen aus: Onlineinstallation neuer Software, Sperren einer Deaktivierungseinheit, Terminieren der Deaktivierungseinheit, Offline-Deinstallation alter Software, Modifizieren eines Informationsmodells und Setzen eines Wartungsstatus, Offlineinstallation neuer Software, Instanziieren einer Aktivierungseinheit, Entsperren der Aktivierungseinheit und Online-Deinstallation der alten Software.

10. Knoten gemäß Anspruch 7, wobei der Prozessor weiterhin konfiguriert ist, um die Aktualisierungsvorgänge zu ordnen, durch Bestimmen, dass entweder: (a) kein Onlinevorgang verschachtelt werden darf, (b) Onlinevorgänge bei einer untersten der Vielzahl von Schichten verschachtelt werden dürfen, (c) Onlinevorgänge bei einer obersten der Vielzahl von Schichten verschachtelt werden dürfen, oder (d) Onlinevorgänge bei einer zwischenliegenden der Vielzahl von Schichten verschachtelt werden dürfen.

11. Knoten gemäß Anspruch 7, wobei der Prozessor ebenso konfiguriert ist, um die Aktualisierungsvorgänge in einer Reihenfolge durchzuführen, die durch den Ordnungsvorgang bestimmt ist.

## Revendications

1. Procédé de préparation d'une mise à jour d'un sous-système logiciel comportant une pluralité de couches (12, 14, 16 ; 22, 24, 26) comprenant :
- la commande (702) d'opérations de mise à jour pour chacune desdites couches dudit sous-système logiciel sur la base de dépendances d'installation entre ladite pluralité de couches et le temps d'exécution, comprenant :
-- le regroupement d'au moins certaines desdites opérations de mise à jour dans une phase de démontage, une phase de reconfiguration et une phase de reconstruction, dans lequel i) la phase de démontage comprend les opérations qui surviennent lorsque des entités actuelles et leur logiciel sont retirés du sous-système logiciel, ii) la phase de reconfiguration comprend les opérations associées au changement de la configuration du sous-système logiciel actuel en une nouvelle configuration, et iii) la phase de reconstruction comprend les opérations associées à l'installation du logiciel pour la configuration changée et l'instanciation ou la réinstanciation des entités appropriées en utilisant le logiciel changé dans le sous-système logiciel ;
-- l'entrelacement, pour chacune desdites couches, d'une opération de mise à jour en ligne associée à l'une respective desdites phases de démontage et de reconstruction avec des opérations associées à l'autre desdites phases de démontage et de reconstruction si des couches inférieures n'ont pas besoin d'être exécutées au cours de ladite opération de mise à jour en ligne, dans lequel l'étape de la commande sans aucun entrelacement signifie que des entités de couche supérieure sont hors ligne pendant le temps de désinstallation/installation complète de l'intégralité de la pluralité de couches ; et
-- sinon, la transformation de ladite opération de mise à jour en ligne en une opération de mise à jour hors ligne et l'exécution de ladite opération de mise à jour hors ligne avec d'autres opérations regroupées dans une même phase ; et
- la mémorisation (704) desdites opérations de mise à jour commandées associées aux dites couches dudit sous-système logiciel, dans lequel
l'opération de mise à jour en ligne concerne un logiciel qui peut être installé ou désinstallé sans perturber ou influencer le fonctionnement en cours d'une ou plusieurs entités dans le sous-système, et
l'opération de mise à jour hors ligne concerne des opérations qui influencent le comportement de l'une ou plusieurs entités.

2. Procédé selon la revendication 1, dans lequel la pluralité de couches comprend une couche d'application (16 ; 26), une couche d'intergiciel (14 ; 24) et une couche de système d'exploitation (12 ; 22).

3. Procédé selon la revendication 1, dans lequel lesdites opérations de mise à jour comprennent une pluralité de : l'installation en ligne d'un nouveau logiciel, le verrouillage d'une unité de désactivation, la terminaison de ladite unité de désactivation, la désinstallation hors ligne d'un ancien logiciel, la modification d'un modèle d'informations et le réglage d'un statut de maintenance, l'installation hors ligne d'un nouveau logiciel, l'instanciation d'une unité d'activation, le déverrouillage de ladite unité d'activation et la désinstallation en ligne dudit ancien logiciel.

4. Procédé selon la revendication 1, dans lequel ladite étape de la commande comprend en outre la détermination que :
(a) aucune opération en ligne ne peut être entrelacée,
(b) des opérations en ligne peuvent être entrelacées à l'une inférieure de ladite pluralité de couches, (c) des opérations en ligne peuvent être entrelacées à l'une supérieure de ladite pluralité de couches, ou (d) des opérations en ligne peut être entrelacées à l'une intermédiaire de ladite pluralité de couches.

5. Procédé selon la revendication 1, comprenant en outre l'étape de :
- l'exécution desdites opérations de mise à jour dans un ordre déterminé par ladite étape de la commande.

6. Support lisible par ordinateur comprenant des portions de code qui, lorsqu'elles sont exécutées sur un processeur, configurent le processeur pour effectuer toutes les étapes d'un procédé selon l'une quelconque des revendications de procédé précédentes.

7. Noeud (600) pouvant préparer une mise à jour d'un sous-système logiciel comportant une pluralité de couches (12, 14, 16 ; 22, 24, 26), ledit noeud comprenant :
un processeur (602) configuré pour:
- commander des opérations de mise à jour pour chacune desdites couches dudit sous-système logiciel sur la base de dépendances d'installation entre ladite pluralité de couches et le temps d'exécution, comprenant :
-- le regroupement d'au moins certaines desdites opérations de mise à jour dans une phase de démontage, une phase de reconfiguration et une phase de reconstruction, dans lequel i) la phase de démontage comprend les opérations qui surviennent lorsque des entités actuelles et leur logiciel sont retirés du sous-système logiciel, ii) la phase de reconfiguration comprend les opérations associées au changement de la configuration du sous-système logiciel actuel en une nouvelle configuration, et iii) la phase de reconstruction comprend les opérations associées à l'installation du logiciel pour la configuration changée et l'instanciation ou la réinstanciation des entités appropriées en utilisant le logiciel changé dans le sous-système logiciel ;
-- l'entrelacement, pour chacune desdites couches, d'une opération de mise à jour en ligne associée à l'une respective desdites phases de démontage et de reconstruction avec des opérations associées à l'autre desdites phases de démontage et de reconstruction si des couches inférieures n'ont pas besoin d'être exécutées au cours de ladite opération de mise à jour en ligne, dans lequel la commande sans aucun entrelacement signifie que des entités de couche supérieure sont hors ligne pendant le temps de désinstallation/installation complète de l'intégralité de la pluralité de couches ; et
-- sinon, la transformation de ladite opération de mise à jour en ligne en une opération de mise à jour hors ligne et l'exécution de ladite opération de mise à jour hors ligne avec d'autres opérations regroupées dans une même phase ; et
- mémoriser lesdites opérations de mise à jour commandées associées aux dites couches dudit sous-système logiciel dans un dispositif de mémoire (604), dans lequel :
l'opération de mise à jour en ligne concerne un logiciel qui peut être installé ou désinstallé sans perturber ou influencer le fonctionnement en cours d'une ou plusieurs entités dans le sous-système, et
l'opération de mise à jour hors ligne concerne des opérations qui influencent le comportement de l'une ou plusieurs entités.

8. Noeud selon la revendication 7, dans lequel la pluralité de couches comprend une couche d'application (16 ; 26), une couche d'intergiciel (14 ; 24) et une couche de système d'exploitation (12 ; 22).

9. Noeud selon la revendication 7, dans lequel lesdites opérations de mise à jour comprennent une pluralité de : l'installation en ligne d'un nouveau logiciel, le verrouillage d'une unité de désactivation, la terminaison de ladite unité de désactivation, la désinstallation hors ligne d'un ancien logiciel, la modification d'un modèle d'informations et le réglage d'un statut de maintenance, l'installation hors ligne d'un nouveau logiciel, l'instanciation d'une unité d'activation, le déverrouillage de ladite unité d'activation et la désinstallation en ligne dudit ancien logiciel.

10. Noeud selon la revendication 7, dans lequel le processeur est configuré pour commander lesdites opérations de mise en niveau par la détermination que : (a) aucune opération en ligne ne peut être entrelacée, (b) des opérations en ligne peuvent être entrelacées à l'une inférieure de ladite pluralité de couches, (c) des opérations en ligne peuvent être entrelacées à l'une supérieure de ladite pluralité de couches, ou (d) des opérations en ligne peut être entrelacées à l'une intermédiaire de ladite pluralité de couches.

11. Noeud selon la revendication 7, dans lequel ledit processeur est également configuré pour exécuter lesdites opérations de mise à jour dans un ordre déterminé par ladite étape de commande.
